# EUROPEAN PATENT APPLICATION

(11) **EP 2 161 488 A1**
(43) Date of publication of application: **10.03.2010**
(21) Application number: 08163971.8
(22) Date of filing: 09.09.2008
(51) Int. Cl.: F16L 47/06, F16L 1/16

(54) **A pipe section for use in a submerged pipeline system, the submerged pipeline system and the use thereof**

(71) Applicant: Heerema Fabrication Group B.V., 3336 LH Zwijndrecht (NL)
(72) Inventor: Greveling, Marinus, 4724 HE Wouw (NL); Klaver, Jan-Pieter, 4797 BE Willemstad (NL)
(74) Representative: Kortekaas, Marcel C.J.A.

(57) **Abstract**

This invention concerns a pipe section for use in a submerged pipeline system, the submerged pipeline system and the use thereof. In particular it concerns a submerged pipeline system for long-distance transport of potable water. More in particular, the present invention concerns a submerged pipeline system being constructed of pipe sections and coupling devices, in which the pipe sections are fitted at each end of the pipe with a cylindrical spigot (2) having dimensions and threading suitable to engage with the bell ends (1) of the coupling devices, wherein the pipe sections are made of an engineering thermoplast and wherein the spigots (2) and the coupling devices are made of a cured resin composition. The invention further concerns the method for preparing the submerged pipeline wherein the pipe sections and the coupling devices are engaged in a bell and spigot joint on a marine assembly location. An embodiment of the invention concerns the pipe sections used in the above pipeline system and the method for preparing the same. A further embodiment of the invention concerns end-pieces provided with the cylindrical spigot (2) that may be used as intermediate in the preparation of the above pipe sections, as well as the method for preparing the end-pieces. Finally the invention also concerns the use of the above submerged pipe line system, in particular for transporting fluids, more in particular for transporting water, preferably potable water.

## Description

### Technical Field

This invention concerns a pipe section for use in a submerged pipeline system, the submerged pipeline system and the use thereof. In particular it concerns a submerged pipeline system for long-distance transport of potable water.

### Background Art

Submerged pipelines for transport of fluids such as oil are known. In WO 01/40695 a submerged pipeline for transporting fluids such as oil and/or gas is described. The pipeline floats for all or at least part of its length. The buoyancy is provided by floating elements and/or floating material arranged at intervals and in a mainly uniform layer around the pipeline, possibly in combination with weights or sinker material. The pipeline is anchored to the seabed by stays or anchor lines arranged at intervals. It is expedient for tension to be applied to the pipeline in a longitudinal direction and for the distance between the anchor points to vary.

From WO 01/96771 a method for providing a pipeline connection between two points at sea is known. Thus, a pipeline floating in the sea is suspended between two spaced-apart points of support in the sea by means of a torque-free connection and is made to hang at such a depth between the two points of support that the influence of waves at the water level of the pipeline are eliminated or will be reduced to an acceptable level. Stresses occurring in the pipeline are thus eliminated. The pipeline is tension-loaded via the points of support. A transport arrangement comprising a pipeline connection between two points at sea is also described.

RU 2149304 concerns marine pipelines. Thus a pipeline is laid between bottom of water basin and its surface attaining zero buoyancy to this pipeline and securing it by means of braces with ballast weights and floats. The pipeline is assembled of separate links and is connected by means of sleeves with limited angular mobility. According to the inventor of this reference, this concerns a simplified procedure of laying pipelines.

BE 1013453 concerns a floating piping system for the transportation of liquid media, being constructed of pieces of piping that are connected together, in which the pieces of pipe are fitted with a flotation device and in which the float or floats are each connected to the body of the pipe by a flexible element in such a way that the piping system runs some distance below the surface of the water. This eliminates the chance of the piping system being damaged by collisions and the motions of waves do not affect it.

Pieces of piping, herein referred to as pipe sections, which are used for any of the above mentioned pipeline systems tend to be very long. In order to bridge distances between islands and between islands and the main land, pipe sections themselves already 500 meters long or longer are used and connected to each other. A typical connection concerns a spigot (male type connection means) and bell type connection, which expression includes various known modifications thereof. The mechanical stress on such pipes and on the pipe connections or joints is rather high and thus such pipes tend to be constructed of reinforced materials. Thus, they may be made of metal and/or multilayer plastics, often with cable reinforcements and the like. Metallic pipes and pipe connections on the other hand may be problematic in areas where sonar navigation is used.

Another serious problem with 500 meters long pipe sections is their preparation. Welding together pipes of this size is not easy. Orbital welding becomes more difficult as the length of the pipe sections that are to be joined increases. Moreover, rotation of the pipe becomes more difficult at large lengths and a large length requires a large assembly location. Welding the pipe sections onto each other on sea is therefore prone to cause failures and thus lead to locale leakage of the transported product and/or contamination thereof with seawater.

The current inventor has set out to develop a submerged pipeline which may be made of pieces of pipe of 500 meters long or longer that are made of common material. Moreover, the current inventor has set out to develop a submerged pipeline which may be used for the transport of potable water, which therefore rules out a large number of materials. In order to solve this problem an elegant means has been found to connect the submerged pipeline system.

### Disclosure of Invention

This invention concerns a pipe section for use in a submerged pipeline system, the submerged pipeline system and the use thereof. In particular it concerns a submerged pipeline system for long-distance transport of potable water.

More in particular, the present invention concerns a submerged pipeline system being constructed of pipe sections and coupling devices, in which the pipe sections are fitted at each end of the pipe with a cylindrical spigot having dimensions and threading suitable to engage with the bell ends of the coupling devices,
wherein the pipe sections are made of an engineering thermoplast and
wherein the spigots and the coupling devices are made of a cured resin composition.

The invention further concerns the method for preparing the submerged pipeline wherein the pipe sections and the coupling devices are engaged in a bell and spigot joint on a marine assembly location.

An embodiment of the invention concerns the pipe sections used in the above pipeline system and the method for preparing the same.

A further embodiment of the invention concerns end-pieces provided with the cylindrical spigot that may be used as intermediate in the preparation of the above pipe sections, as well as the method for preparing the end-pieces.

Finally the invention also concerns the use of the above submerged pipe line system, in particular for transporting fluids, more in particular for transporting water, preferably potable water.

### Brief Description of Figures in the Drawings

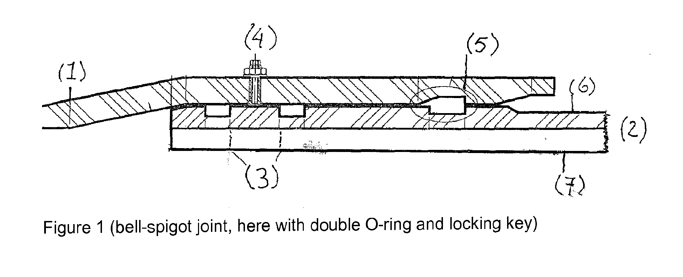

Figure 1 is a schematic presentation of a bell-spigot joint according to the present invention. More specifically, (1) is part of the bell end of a coupling device; (2) is part of the spigot end fitted to the end of a pipe section (not shown), with a sealing means, here a pair of grooves (3) for use with e.g. O-rings (not shown), and a locking key (5) for locking the spigot and the bell pieces. Spigot (2) comprises a cured thermosetting resin composition (6) and a fibre reinforced engineering thermoplast (6). As shown in this figure, the bell-spigot joint may be provided with an optional test nipple 4 (which can be pressurized to e.g. 10 bar to test the sealing).

### Mode(s) for Carrying Out the Invention

Pipeline systems are used in sewage systems, drainage systems, agricultural and/or industrial water systems, water-drawing systems, etc. and the assembly thereof is well-known. Thus it is known to use pipe sections made of an engineering thermoplast. Engineering thermoplasts include for instance polyolefins, polyethers, polyesters, polyamides, polystyrene, PVC or a compound of anyone or more of these engineering thermoplasts. For the current application, it is important that the material used is relatively light (to provide buoyancy) and strong. It also should be relatively inexpensive and easy to handle, in particular as pipe sections of 400 meters long or longer are used in the submerged pipeline system.

The use of the pipeline system for transportation of potable water provides additional requirements. Thus, the pipe sections are preferably made of polyolefins, more preferably made of polyethylene or ethylene copolymers and most preferably of polyethylene. However, as long as the polymer is relatively light and strong and as long as the polymer is suitable for transport of potable water, any suitable polymer may be used.

Pipe sections of 500 meters long are made by rotational welding shorter pieces together, typically at a location on shore. However, this is not a real limit; it is possible to make even longer pipe sections.

On the other hand, it is not easy to weld pieces together of much greater length, so coupling devices are necessary. These joints however, need to be at least as strong as the pipe sections and provide excellent seal.

Bell and spigot type joints are known and often used to connect tubes and pipes. The sockets of the coupling device and the spigot are typically provided with a threat and other means to ensure a mechanical interlock, and also with o-rings, gaskets or other means to provide a water-tight seal. The spigot has external threads thereon that threadedly mate with internal threads within the sockets of the coupling device.

Moreover, the submerged pipeline system will have pipe sections exhibiting a substantially catenary form, and the female ends of the coupling device will therefore extend at a small angle to the horizontal.

The characteristic feature of the pipeline system of the present invention is that both the spigots on the pipe sections and the coupling device are made of a cured resin composition. More specifically, the spigots applied onto the pipe sections are of a cured resin composition and therefore different from the engineering thermoplast that is used for the preparation of the pipe sections.

The forces that the bell and spigot joint needs to withstand are quite significant (approx 150 tons). Resin compositions that can be used for these joints are epoxy and phenolic resins, as well as polyester resins and polyacrylates of such kinds as are conventionally used for the manufacture of fibre-reinforced resin. The spigot and the coupling device are made of a fibre reinforced composite material, wherein the resin provides the matrix. They are preferably made as a cross-filament wound system. For instance, they may be made by winding a resin impregnated roving around the part that forms the spigot.

As mentioned above, various resin compositions may be used. Preferred resin compositions are polyesters such as terephthalic and isophthalic polyesters, preferably isophthalic polyesters and vinyl ester resins. However, the nature of the resin is not important, as long as the cured resin is strong enough to withstand the forces applied to the submerged pipeline systems.

Also the material may be of the kind that is conventionally used. Thus, it preferably consists of glass fibre, but may also consist of fibres of different natural or synthetic materials. Such other materials include cotton, polyethyleneglycol terephthalate, polyacrylonitrile, polyamide and carbon.

Unique to the present pipeline system is that the spigot is made by first fibre-reinforcing the end-parts of the pipe sections by embedding a woven glass mat into the engineering thermoplast, thus providing an anchor for the fibre reinforced composite material subsequently applied to provide the spigot. Preferably, the spigot is applied onto a separate end-piece, which is a piece of pipe of no more than 12 meters, preferably of no more than 5 meters long and composed of the same engineering thermoplast and which can subsequently fixed to the pipe section by rotational welding.

In both instances, the woven glass mat is embedded into the engineering thermoplast by raising the temperature of the latter until its outer surface is sufficient soft to flow through the woven glass mat when the mat is wound tightly around the end-parts of the pipe section or of the end-piece. Subsequently the resin composition is applied onto these end-parts by winding a roving that is impregnated with the resin composition around these endparts. Cross- Filament Windings are applied until a calculated wall thickness is reached, typically at least 20 mm.

It should be noted, however, that the dimensions are not absolute. For instance, the inner diameter of the pipe sections may vary from 50 mm to 3000 mm. The larger pipes typically have a larger wall thickness. Again, by way of example, the wall thicknes of the pipe section composed of engineering thermoplast may be anywhere in the range of from 5 to 50 mm, preferably from 10 to 45 mm, more preferably from 35 to 40 mm, again depending on the inner diameter of the pipe. The resin composition is then applied until this has reached a wall thickness of from 5 to 50 mm, preferably from 10 to 45 mm, more preferably from 35 to 40 mm, again depending on the inner diameter of the pipe. Typically, the ratio in wall thickness of the engineering thermoplast and the resin composition (together forming a fibre reinforced composite material) is from 3;1 to 1:3, more preferably from 2:1 to 1:2, preferably around 1.

Next the resin is cured or allowed to cure. With conventional resins, no specific curing is needed. Then a spigot is formed. This may be accomplished by known methods. Such methods include grinding the cured composite material to substantial circular dimensions within common standard tolerances, providing a thread or locking key and providing recesses for o-rings and the like.

As mentioned before, in the preferred embodiment of the current invention, the spigot is prepared onto an end-piece first, which may then be fixed to the pipe sections. Fixing the end-pieces to the pipe sections is done by butt-weld welding. Welding of the end-pieces may be done on shore but also off shore, since the end pieces are relatively small.

The submerged pipeline system preferably comprises floating elements to provide additional buoyancy as well as ballast weight and/or anchoring means to maintain the pipeline system submerged. Ideally, the pipeline system is submerged to a depth of at least 100 meters, preferably at least 250 meters, to avoid contact with boats and fishing nets.

The invention is therefore embodied in the end-pieces, provided with a spigot in the manner discussed above, in the pipe sections onto which the end-pieces have been provided and/or which have been provided with a spigot in the manner discussed above, and in the submerged pipeline system made by connecting the pipe sections with the use of the coupling devices. Finally, the current invention also provides the use of the submerged pipeline system for transporting fluids, in particular water, preferably potable water. Ideally, this submerged pipeline system is used for transporting potable water from the main land to islands that have no or insufficient sources of potable water.

## Claims

1. A pipe section for use in a submerged pipeline system, in which the pipe sections are fitted at each end of the pipe section with a cylindrical spigot having dimensions and threading suitable to engage with bell ends of a coupling device, wherein the pipe sections are made of an engineering thermoplast and wherein the spigot is made of a composite material comprising an engineering thermoplast reinforced by fibres and a cured resin composition.

2. A pipe section as claimed in claim 1, wherein the engineering thermoplast is a polyethylene or ethylene copolymer, preferably a polyethylene.

3. A pipe section as claimed in claims 1-2, wherein the end-parts of the engineering thermoplast are fibre-reinforced, wherein the thermosetting resin is applied onto the fibre reinforced engineering thermoplast thus forming a composite material and wherein the composite material is shaped in the form of a spigot.

4. A pipe section as claimed in claims 1-3, wherein the thermosetting resin is selected from epoxy and phenolic resins, polyester resins and polyacrylates.

5. A pipe section as claimed in claims 1-4, onto which an end-piece is welded, which end-piece is a piece of pipe of no more than 12, preferably of no more than 5 meters long, composed of an engineering thermoplast that has been welded on one end to the pipe section and that is fitted at the other end with the spigot.

6. A pipe section as claimed in claims 1-5, comprising a pipe (7) made of fibre reinforced engineering thermoplast, around which a thermosetting resin (6) is provided that is shaped in the form of a spigot (2) and that is provided with at least two grooves (3) and a mechanical locking key device (5) to connect with the bell end (1) of a coupling device.

7. The end-piece of claim 5, for use in the preparation of a pipe section as claimed in claims 1-8.

8. A method for preparing a pipe section as claimed in claims 1-6, wherein the end-piece of claim 7 is fixed by rotational welding onto the pipe section.

9. A method for preparing a pipe section as claimed in claims 1-6 or an end-piece as claimed in claim 7, which method comprises embedding a woven fibre mat into the engineering thermoplast by
a) applying heat to the engineering thermoplast, thereby softening an outer layer of the engineering thermoplast;
b) winding the woven fibre mat tightly around the end parts of the pipe section or end part of the end-piece;
c) allowing the temperature of the engineering thermoplast to cool such that the outer layers hardens and the woven fibre mat is fixed to the engineering thermoplast; and
d) winding a resin impregnated roving comprising the thermosetting resin around the end-part(s) of glass-fibre reinforced engineering thermoplast and curing the resin or allowing the resin to cure, to form the composite material; and
e) shaping the composite material into a spigot.

10. A submerged pipeline system being constructed of coupling devices and pipe sections as claimed in claims 1-6 or as made in claims 8-9.

11. A submerged pipeline system as claimed in claim 10, comprising pipe sections of at least 500 meters long.

12. A submerged pipeline system as claimed in claims 10-11, wherein coupling devices and pipe sections are selected such that the pipe sections have a substantially catenary form, the ends of the pipe sections extending at a small angle to the horizontal.

13. A method for preparing a submerged pipeline system as claimed in claims 10-12, wherein on a marine assembly location the pipe sections are connected together by means of the coupling devices.

14. The use of the submerged pipeline system of claims 10-13 for transporting fluids, preferably water, more preferably potable water.

## Amended claims

### Amended claims in accordance with Rule 137(2) EPC.

**1.** A pipe section provided with a spigot for use in a submerged pipeline system, in which the pipe sections are fitted at each end of the pipe section with a cylindrical spigot having dimensions and threading suitable to engage with bell ends of a coupling device, wherein the pipe sections are made of an engineering thermoplast and wherein the spigot is made of a composite material comprising an engineering thermoplast reinforced by fibres and a cured resin composition.

**2.** A pipe section as claimed in claim 1, wherein the engineering thermoplast is a polyethylene or ethylene copolymer, preferably a polyethylene.

**3.** A pipe section as claimed in claims 1-2, wherein the end-parts of the pipe sections made of engineering thermoplast are fibre-reinforced, wherein the thermosetting resin has been applied onto the fibre reinforced end-parts of the pipe sections made of engineering thermoplast thus forming a composite material and wherein the composite material has been shaped in the form of a spigot.

**4.** A pipe section as claimed in claims 1-3, wherein the thermosetting resin is selected from epoxy and phenolic resins, polyester resins and polyacrylates.

**5.** A pipe section as claimed in claims 1-4, onto which an end-piece is welded, which end-piece is a piece of pipe of no more than 12, preferably of no more than 5 meters long, composed of an engineering thermoplast that has been welded on one end to the pipe section and that is fitted at the other end with the spigot.

**6.** A pipe section as claimed in claims 1-5, comprising a pipe (7) made of fibre reinforced engineering thermoplast, around which a thermosetting resin (6) is provided that is shaped in the form of a spigot (2) and that is provided with at least two grooves (3) and a mechanical locking key device (5) to connect with the bell end (1) of a coupling device.

**7.** An end-piece, which end-piece is a piece of pipe of no more than 12, preferably of no more than 5 meters long, composed of an engineering thermoplast that may be welded at one end onto a pipe section and that is fitted at the other end with the spigot, for use in the preparation of a pipe section as claimed in claims 1-6.

**8.** A method for preparing a pipe section as claimed in claims 1-6, wherein the end-piece of claim 7 is fixed by rotational welding onto a pipe section for use in a submerged pipeline system, in which the pipe sections are fitted at each end of the pipe section with a cylindrical spigot having dimensions and threading suitable to engage with bell ends of a coupling device, wherein the pipe sections are made of an engineering thermoplast and wherein the spigot is made of a composite material comprising an engineering thermoplast reinforced by fibres and a cured resin composition.

**9.** A method for preparing a pipe section as claimed in claims 1-6 or an end-piece as claimed in claim 7, which method comprises embedding a woven fibre mat into the pipe sections made of engineering thermoplast by
a) applying heat to the engineering thermoplast, thereby softening an outer layer of the engineering thermoplast;
b) winding the woven fibre mat tightly around the end parts of the pipe section or end part of the end-piece;
c) allowing the temperature of the engineering thermoplast to cool such that the outer layers hardens and the woven fibre mat is fixed to the engineering thermoplast; and
d) winding a resin impregnated roving comprising the thermosetting resin around the end-part(s) of glass-fibre reinforced engineering thermoplast and curing the resin or allowing the resin to cure, to form the composite material; and
e) shaping the composite material into a spigot.

**10.** A submerged pipeline system being constructed of coupling devices and pipe sections as claimed in claims 1-6 or as made in claims 8-9.

**11.** A submerged pipeline system as claimed in claim 10, comprising pipe sections of at least 500 meters long.

**12.** A submerged pipeline system as claimed in claims 10-11, wherein coupling devices and pipe sections are selected such that the pipe sections have a substantially catenary form, the ends of the pipe sections extending at a small angle to the horizontal.

**13.** A method for preparing a submerged pipeline system as claimed in claims 10-12, wherein on a marine assembly location the pipe sections as claimed in claims 1-6 or as made in claims 8-9 are connected together by means of the coupling devices.

**14.** The use of the submerged pipeline system of claims 10-13 for transporting fluids, preferably water, more preferably potable water.
